# EUROPEAN PATENT SPECIFICATION

(11) **EP 4 396 113 B1**
(45) Date of publication and mention of the grant of the patent: **25.11.2026**
(21) Application number: 22762158.8
(22) Date of filing: 25.07.2022
(51) Int. Cl.: B66C 1/68, B66C 3/00, B66C 13/16, G01G 19/18, G01L 1/22

(54) **LOAD WEIGHING LINK MEMBER ON A CRANE ARM**
LASTWIEGEVERBINDUNGSELEMENT AUF EINEM KRANARM
ÉLÉMENT DE LIAISON DE PESÉE DE CHARGE SUR UN BRAS DE GRUE

(30) Priority: 01.09.2021 SI 202100165
(43) Date of publication of application: 10.07.2024
(73) Proprietor: Tajfun Planina Proizvodnja Strojev, D.o.o., 3225 Planina Pri Sevnici (SI)
(72) Inventor: UMEK, Anton, 4290 Trzic (SI); JERMAN, Boris, 1235 Radomlje (SI); GLIHA, Mitja, 8210 Trebnje (SI); PETEK, Matej, 3241 Podplat (SI); SPAN, Iztok, 1000 Ljubljana (SI)
(74) Representative: Borstar, Dusan
(86) International application number: PCT/SI2022/000004
(87) International publication number: WO 2023/033747

(56) References cited:
- WO-A1-2004/005180
- WO-A1-2014/081378
- WO-A1-2014/092656
- WO-A1-2019/009817

## Description

The invention refers to a link member for a crane arm, e.g. an arm of a mobile hydraulic crane with a telescopic arm, which is mountable onto a motor vehicle, wherein such a link member is suitable for weighing a load during transposition thereof by means of a grabber, which is attached to said crane arm and which is, either as such or also together with the load, in a controlled manner rotatable around its substantially vertical geometric axis.

Pursuant to the International Patent Classification, such an invention belongs to transporting and working operations, namely to cranes, and specifically to technical features of load engaging elements or devices in connection with determining of the weight of the load, and should therefore belong to the IPC-Class B 66 C 13/16.

When starting from the previously mentioned link member, which should be suitable for attaching of a grabber, which is intended for manipulating with each load by means of a crane arm, wherein a freely hanging of said grabber onto said crane arm must be assured together with enabling, on the one hand, a freely rotating of said grabber around each one of both mutually perpendicular and substantially horizontal geometric axles, and on the other hand, either a freely, or a controlled i.e. pre-defined, turning of said grabber together with the belonging load around a substantially vertical geometric axis, then the invention is rest on a problem, how to enable weighing of the load, when it is held by said grabber, which freely hanging on said crane arm, either in a static or in a dynamic state thereof, namely during transposition of said load by means of said grabber and even in a situation, when said link member is connected with a rotating unit, which is suitable for performing a controlled turning of the grabber together with the belonging load around a substantially vertical geometric axis, which means a correct measuring despite to inertia forces, which may occur by accelerating or decelerating of the load by its turning around said substantially vertical geometric axis.

For the purpose of understanding and interpretation of the invention, the expression »substantially vertical geometric axis« means a geometric axis, which extends throughout the link member and is by freely hanging of the grabber together with the load, which is held by it, perfectly vertical, although during the practical use said grabber may be temporarily pivoted at a certain angle apart from the vertical axis, whenever the load together with the grabber is swiveled around at least one horizontal axis. Quite analogously, the term »substantially vertical geometric axis« should be understood as to refer to an axis, which is by maintaining of said link member in position and by freely hanging of the grabber located within the horizontal plane, but can generally also be deflected apart from said horizontal plane during the practical use, as a consequence of swinging of the grabber together with the load.

A crane arm with a link member for operational accessory is disclosed in EP 1 889 808, wherein the rotating operational accessory, in particularly a grabber for gripping and transposition of timbers or similar at least approximately cylindrical solid objects, can be attached to the crane arm by means of said link member.

A link member as such is also described in EP 2 931 646 B1. Such a link member comprises two pivot joints, which are along the vertical axis spaced apart from each other, namely a top pivot joint, which arranged on the side of the crane arm, and a bottom pivot joint, which arranged on the side of the rotation unit on the operational accessory, wherein said pivot joints are conceived as a Cardan joint, wherein both pivoting axles thereof, around which the link member can be pivoted relatively to the crane arm and the rotating unit, extend perpendicularly to each other. Furthermore, the bottom pivot joint of the link member is adjusted for establishing of a pivotal interconnection between the link member and the rotating unit, and therefore presents an eye with a through hole, which passes in a direction of said pivoting axis of the bottom pivot joint and is adjusted to receive a bolt, while the top pivot joint is arranged on the side of the crane arm and is adjusted for establishing interconnection therewith, wherein said top pivot joint is created as a fork, comprising two arms, which are spaced apart from each other add each per se furnished with a throughout bore, so that a bolt is insertable through these bores, which serves for establishing a required connection with the crane arm.

Still further, a weighing apparatus for cranes is disclosed in CN 104 016 232 B, which comprises a carrying eye and a carrying hook, which are in the vertical direction separated from each other. The carrying eye is attached to the top attachment plate, while the hook is attached to the bottom attachment plate and the whole assembly is encased with a cover. Said carrying plates are connected through a sensor for measuring the extension resulting from the tension due to the weight of the load. A comparison weight is hung under the top carrying plate and comprises a sensor for measuring acceleration, upon which the weight of the load can determined during displacing said weight by means of a method of comparison. Such a weight measuring apparatus ensures relatively accurate measurement results, however the result may be distorted due to non-linear character of deformations and also due to the friction hysteresis.

In addition, devices for weighing of loads during transposition thereof are also described in US 9 000 311 B1, WO 2013/025141 A and in WO 2017/111684 A1.

A link member according to the preamble of claim 1, which is suitable for connecting of a grabber with a hydraulic crane arm and also for determination of the weight of the load during transportation of said load by means of a grabber, is described in WO 2019/009817 A1. Such a link member comprises two pivot joints, which are spaced apart from each other another in a direction along the vertical axis, namely a top pivot joint, which arranged on the crane arm, and a bottom pivot joint, which is arranged on the side of a rotator or an operational accessory. Said pivot joints are designed as a Cardan joint, wherein their pivoting axles, around which the link member can be pivoted relatively to the crane arm or the rotator, are perpendicular to each other. The bottom pivot joint of the link member is foreseen to ensure a pivotal connection of the link member with the rotator and presents an eye with a throughout bore, which extends in a direction of said pivoting axis of said bottom pivot joint and is adjusted tor receive of a bolt, which serves for establishing a connection between the link member and said rotator or grabber pivotally around said axis. The top pivot joint is arranged on the side of the crane arm and suitable for establishing a connection therewith, wherein said top pivot joint is conceived as an eye and is furnished with a throughout bore, which extends in a direction of said pivoting axis of the top pivot joint and is suitable for receiving of a bolt, which serves for establishing a required connection between the link member and said crane arm pivotally around said axis. Besides, the bottom pivot joint is furnished with a prismatic section of a square cross-section, which extends coaxially with said central axis towards the top pivot joint and is on its terminal portion furnished with a threaded bolt, which is furnished with a centrally arranged blind bore, into which a screw is screwed, which is on its first end portion furnished with a left oriented thread and on its opposite end portion with a right oriented thread. A compensating assembly is inserted between said top pivot joint and said bottom pivot joint of the link member and is formed by two groups of plates, wherein said groups are separated from each other by means of spacers. Each group consists of several plates, which are arranged in a sequence each above another and each of them is furnished with a centrally arranged substantially square-shaped passage, which is adjusted to the shape and dimensions of said prismatic piece on the bottom pivot joint of the link member, wherein each of said plates is furnished with a sequence of throughout bores, which are arranged along its circumference and are spaced apart from each other, as well as with two longitudinal recesses, which are spaced apart from each other. Additionally, said plates in each group are alternatively arranged, so that said recesses of each particular plate are oriented perpendicularly with respect to recesses on the neighboring plates located below and above it. Furthermore, said plates and said spacers are connected with each other by means of screws, which extend through said bores within the plates. A cover plate is foreseen above said compensating assembly and is by means of a nut and washer, which are arranged on said threaded bolt on the prismatic piece on the bottom pivot joint, attached to said bottom pivot joint. Said screw protrudes through said cover plate towards the top pivot joint. A supporting plate is arranged above said cover plate and is firmly connected to said top pivot joint and furnished with two supporting members, which are spaced apart from each other and are arranged on the side of said top pivot joint symmetrically with respect to said central axis of the link member, and a bending beam is rest on said supporting members and is screwed to said supporting plate in two locations symmetrically with respect to said central axis.

Said bending beam is uniformly conceived and comprises two supporting areas, which are arranged correspondingly to said supporting members on said supporting plate and between which two each above the other arranged bridges are available, namely a thicker bottom bridge, which is furnished with a central throughout bore, through which said screw extends and to which said bridge is attached by means of a nut, as well as a thinner and easily deformable top bridge, on the external surface of which, which faced towards the top pivot joint, two sensors are attached, which are suitable for detecting of extensions and are arranged symmetrically with respect to the central axis. Two movement detecting sensors are also foreseen, wherein each of them includes both a sensor for detecting accelerations as well as a gyroscope. The first sensor is located in the area of said link member, namely in the area between the first point on said axis extending through the top pivot joint, and the second point, which is located on said axis extending through the bottom pivot joint and below said first point, while the second sensor is located in the area of said rotator at a sufficient distance from said second point on the axis extending through the bottom pivot joint of the link member. As mentioned, a compensating assembly is available between the top pivot joint and the bottom pivot joint of the link member, which includes two groups of multiple plates, and groups are separated apart from each other by means of spacers. The presence of plates is important due to elimination of deformations in the transversal direction, which could have some impact to deformations in the longitudinal direction, which serve for determining of the weight of the load, which is together with the grabber hung on said link member. Such a configuration is suitable in most cases and the presence of said plates certainly contributes to a significant improvement of the accuracy of determining the weight of the load during transposition thereof. However, in practice a problem occurs especially in situations, when the link member is connected to a hydraulic rotator, and a grabber is attached to said rotator, wherein such a rotator is intended for enabling a controlled rotation of the grabber together with the load around a substantially vertical axis, namely around the geometric axis of the rotator, which is by freely hanging of the grabber together with the load perfectly vertical, but may be temporarily also declined from said vertical axis at a certain angle, until the load together with the grabber is swiveling around at least one horizontal axis. Said rotator is intended for rotating each load around said substantially vertical axis and comprises a propulsion means, usually a hydraulic motor, which is capable of rotating the grabber with each load for a predetermined angle around said substantially vertical axis. The angular speed of the grabber with the load my generally be varied, namely the grabber with the load accelerates when transitioning from a standstill into rotation and correspondingly decelerates by means of a suitable, torque when slowing the rotation down. The acceleration and deceleration of the mass of the load and/or grabber results in the occurrence of significant inertial forces, which results in torsion stresses within the link member acting in the transversal direction thereof, which can, especially by transporting of heavier loads, e.g. timbers, lead to slipping and shifting between plates, so that within said group of plates, the neighboring plates may slip and turn relatively to each other within the same group, by which the original shape of such a group of plates may be transformed in its longitudinal direction into a helical shape. The changed configuration of the compensation assembly may have significant influence in view of results of measuring the weight of each load, therefore the use of such a design of link assembly is proven to not be perfectly suitable for application in such circumstances.

The present invention generally refers to a link member for a crane arm, which is suitable for weighing of a load and is on its one terminal area equipped with a first eye which is furnished with a throughout bore, which extends in a direction along the first substantially horizontal geometric axis x, while on the remaining terminal area it is equipped with a second eye, which is furnished with a through hole, which extends in a direction along the second substantially horizontal geometric axis y, which is perpendicular with regard to said first substantially horizontal geometric axis x. Said eyes are firmly connected with each other via a central area, which is on the one hand mechanically rigid, but is on the other hand also elastically deformable, so that said link member is adapted to form a connection, which is freely pivotable around each of said horizontal axles *x, y,* namely on one hand with the arm of the crane via around said first horizontal axis x freely pivotable pivot joint, and on the other hand via a freely around said second horizontal axis y pivotable pivot joint also with said grabber or a rotator, which is connected to the grabber and is adapted for enabling a controlled rotation of the grabber around the substantially vertical geometric axis *z*, wherein at least one sensor is installed in the area of said elastically deformable central area of the link member and is suitable for detecting deformations of the link member, which are generated due to the weight of each load, when it by means of said grabber hung on the crane arm.

In accordance with the present invention it is proposed that said elastically deformable area together with said eyes forms a rigidly interconnected stirrup, which is generally tubular conceived, and is weakened by an extensive throughout passage, which has either a circular or a polygonal cross-section, which is symmetric with regard to said substantially vertical geometric axis *z*, wherein said throughout passage is embedded by two elastically deformable lateral walls and extends along a substantially horizontal geometric axis *x'*, which extends parallel to the geometric axis *x, y* of the one of said eyes, and wherein within the interior of said passage, namely at least approximately in the area of the longest distance between said walls, a measuring beam is installed, which is rigidly connected to each one of said opposite walls and is moreover elastically deformable and stable in view of buckling at least in its longitudinal direction *y'* extending perpendicularly to said longitudinal axis *x'* of the throughout passage, wherein said measuring beam comprises at least one flat surface, which extends in a direction of said longitudinal axis *x'*, and onto which suitable sensors of the measuring assembly are attached, wherein said sensors are electrically connected with each other and are suitable for measuring of extensions or contractions of said measuring beam in a direction of its longitudinal axis *x'*, which result from elastic deformations of the central area due to relative displacement thereof, namely due to mutual approaching or distancing of said lateral walls when the link member is exposed to stresses in a direction along said substantially vertical geometric axis *z*.

In this, said central throughout passage in the elastically deformable central area of the link member is preferably available as a cylindrical through hole. In such case, the longitudinal axis *y'* of the measuring beam is arranged within a substantially horizontal diametrical plane of the cylindrical central passage in the central area of the link member.

In one of further possible embodiments of the invention, each of said lateral walls in the central area of the link member, by which said throughout passage is surrounded, is on its external surface furnished with a flat surface, wherein said flat surfaces on both opposite walls extend in a direction of said substantially vertical geometric axis *z* and are parallel with each other. A through hole is foreseen in each of said walls in the area of each of said flat surfaces, wherein said holes in both walls extend coaxially with each other, so that the measuring beam is inserted through said holes and is rigidly connected with each one of both opposite walls.

Said measuring beam is generally cylindrical, while said flat surface, which extends in a direction of the longitudinal axis *x'* of said measuring beam and is suitable for receiving said sensors, is formed by one of both opposite dominant surfaces of a flattened and weakened central area of the measuring beam, the cross-section of which is rectangular. In a preferred embodiment, said measuring beam on in its both ends furnished with cylindrical areas, which are adjusted for inserting into said mutually coaxial holes within the opposite walls of said elastically deformable central area of the link member, and are additionally adapted for establishing a rigid mutual interconnection between each of said terminal areas of the measuring beam and each corresponding wall of the elastically deformable central area of the link member. In this, when observed in a direction of said longitudinal directional axis *y'*, on each side of said substantially flattened and weakened central area of the measuring beam, in which its cross-section is rectangular, two substantially semicircular i.e. in profile U-shaped transversal recesses are foreseen between said central area and each corresponding terminal area, wherein each pair of opposite recesses, which are symmetrical with regard to said longitudinal geometric axis *y'*, extends in transversal direction with regard to said longitudinal geometric axis *y'* and simultaneously also in a direction, which is perpendicular with regard to planes of both opposite dominant surfaces of said substantially flattened and weakened central area of the measuring beam in the area of its rectangular cross-section.

Said sensors, which are attached onto one of the opposite dominant surfaces of the weakened and significantly flattened central area of the measuring beam with said rectangular cross-section, are arranged in such manner that the first pair of sensors, which are spaced apart from each other symmetrically with regard to the longitudinal geometric axis *y'*, is adjusted for measuring of extensions or contractions of said measuring beam along the plane in a direction of the longitudinal geometric axis *y'* thereof, while the remaining pair of mutually spaced and with regard to the longitudinal geometric axis *y'* symmetrically arranged sensors is adjusted for measuring of extensions or contractions of said measuring beam within the same plane, however in a direction along its transversal geometric axis *x'*, namely in a direction perpendicularly to the previously mentioned longitudinal geometric axis *y'*, In this, both pairs of said sensors are electrically connected with each other to form a Wheatstone bridge, which in the electrical aspect forms an integral part of the measuring unit, which is suitable for measuring forces, which cause deformations of the measuring beam in the central area of the link member.

The invention will be described in more detail on the basis of embodiments and in relation with the attached drawings, in which
- Fig. 1: presents a link member of a grabber, when installed on a mobile hydraulic crane between the telescopically extendable crane arm section and said rotatable grabber;
- Fig. 2: shows a detailed presentation of application of the link member according to Fig. 1;
- Fig. 3: shows a separately shown link member according to the invention, in isometric view;
- Fig. 4: quite similarly like Fig. 3 presents a link member in isometric view;
- Fig. 5: shows a link member according to Figs. 3 or 4 in front view;
- Fig. 6: shows a link member according to Figs. 3 - 5 in side view;
- Fig. 7: presents a measuring beam in an isometric view;
- Fig. 8: shows again a measuring beam in isometric view, however under a different observation angle;
- Fig. 9: shows a measuring beam in orthogonal side view;
- Fig. 10: shows a measuring beam in front view;
- Fig. 11: shows a measuring beam in top view;
- Fig. 12: shows a measuring beam, furnished with measuring gauges, in front view;
- Fig. 13: shows a measuring beam, furnished with measuring gauges in top view;
- Fig. 14: shows a schematic presentation of electric interconnection of measuring gauges on said measuring beam;

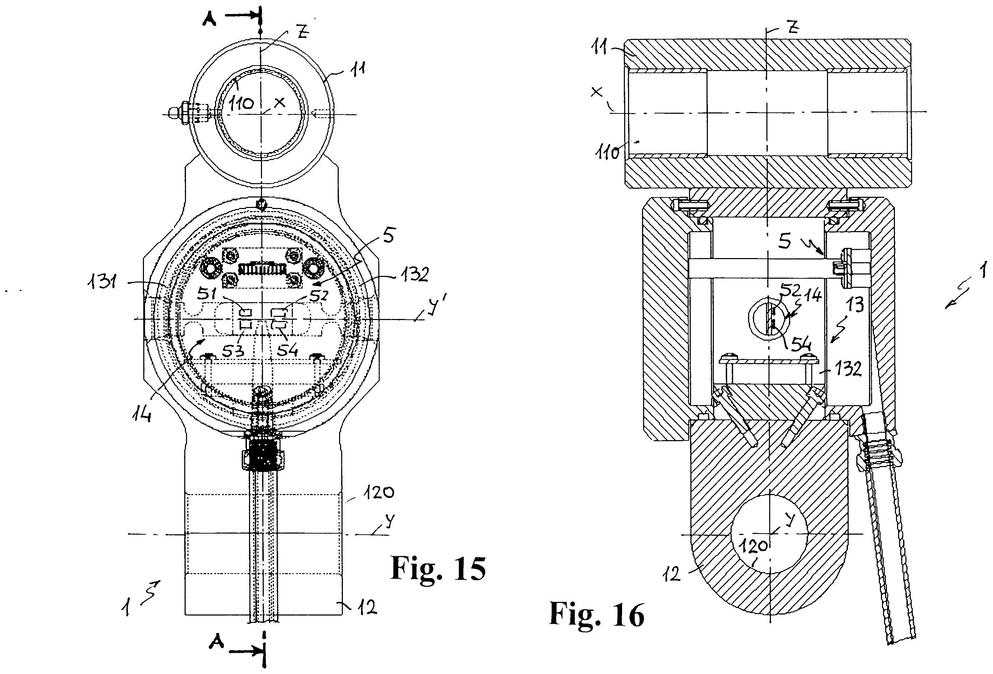

- Fig. 15: shows a link member, furnished with a measuring beam, measuring gauges and corresponding electronic components, in front view; and
- Fig. 16: shows a measuring unit in a cross-section along the longitudinal plane A - A according to Fig. 15.

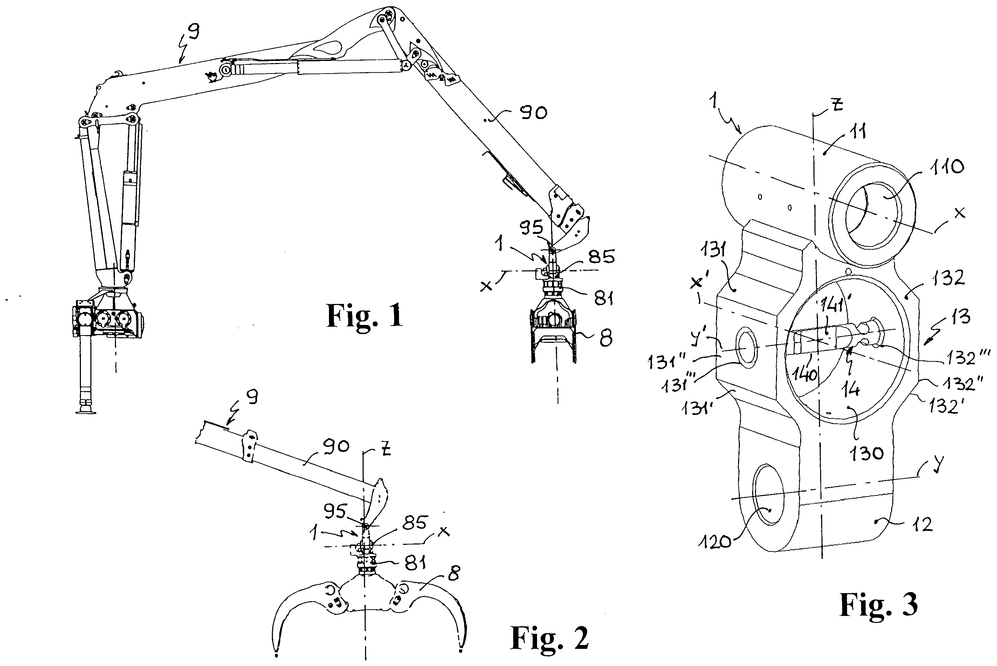

A link member 1, which is suitable for weighing of loads and is located between a grabber 8 and an arm 90 on a crane 9, is shown on Fig. 1 in its ready-to-use state upon being mounted on the arm 90 of the crane 9. Moreover, said link member 1 is also shown on Fig. 2, in which said grabber 8 is by means of a rotator 80, relatively to the position thereof in Fig. 1, turned by 90° around a substantially vertical geometric axis *z*.

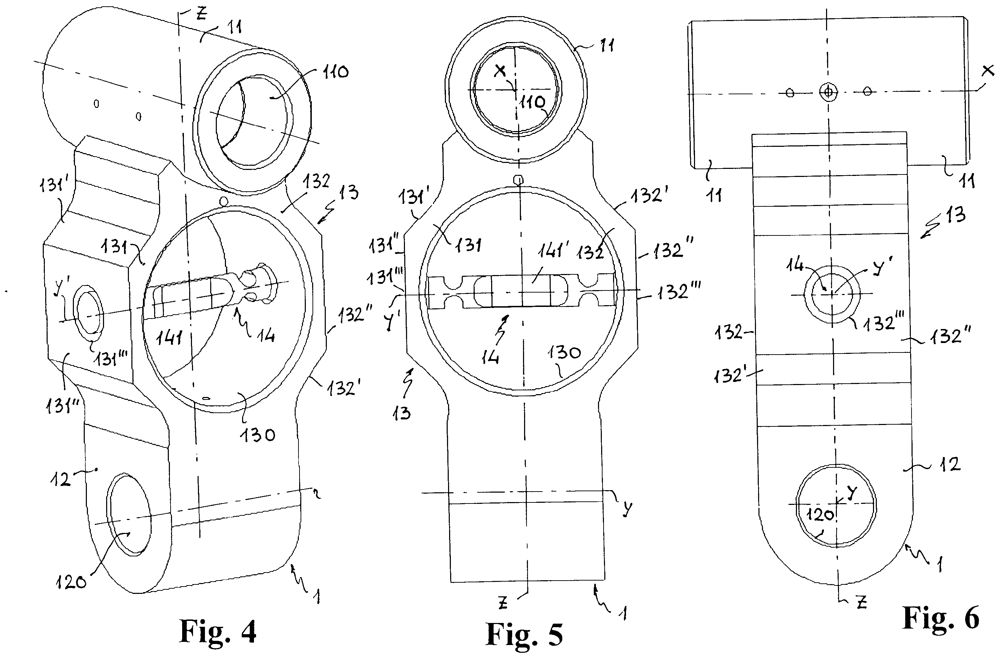

A link member 1, which is as such and without any electric and electronic equipment as it will be discussed in the forthcoming description, separately shown in Figs. 3 - 6, is on the hand equipped with a first eye 11, which is furnished a through hole 110 extending in a direction along the first substantially horizontal geometric axis *x*, and on the other hand also with a second eye 12, which is also furnished with a through hole 120, which extends in a direction along the second substantially horizontal geometric axis *y*, which is perpendicular with regard to said first substantially horizontal geometric axis *x*.

Said first eye 11, together with suitable eyes on said arm 90 of the crane 9 and a suitable bolt, forms a mechanical pivot joint 95, by means of which the link member 1 is connected to the arm 90 of the crane 9, by which its freely pivoting said axis x is enabled. On the other hand, said second eye 12, together with at least one eye on the grabber 8 or on the rotator 80 of the arm 90 of the crane 9 and a suitable bolt, forms a mechanical pivot joint 85, by means of which the grabber 80 is connected, either directly or indirectly via said rotator 81, to said link member 1 pivotally around said axis y, so that the grabber 8 is hung on the arm 90 of the crane 9 by means of the link member 1 and is pivotal both around said substantially horizontal geometric axes *x, y,* which are perpendicular to each other, and is moreover optionally by means of said rotator 81 rotatable around a substantially vertical geometric axis *z*.

Said eyes 11, 12 are firmly interconnected with each other through a central area 13, which is on one hand mechanically rigid and on the other hand elastically deformable. A required mechanical rigidity of said central area 13, and consequently of the link member 1, refers to its capability of withstanding to longterm dynamic stresses, which is required in order to assure the carrying capacity of the crane in view of transposition of any load, which is hung on said link member 1, namely the load as such plus any other required attachment means, as well as the grabber 8, and optionally also the rotator 81. In this, a controlled and measurable elastic deformability of the central area 13 is required, which is however by means of measures as proposed by the invention and disclosed in the forthcoming disclosure, achieved without any doubt.

Said link member 1 is therefore generally intended to establish a connection, which is freely pivotable around each of said substantially horizontal and mutually perpendicular axis *x, y,* on one hand with the arm 90 of the crane 9 via the pivot joint 95, which allows freely pivoting around said first horizontal axis *x*, and on the other hand via a pivot joint 85, which allows freely pivoting around said second horizontal axis y, either directly with the grabber 8 or with the rotator 81, which is connected to the grabber 8 and adapted to perform a controlled rotation of the grabber 8 around said substantially vertical geometric axis *z*.

According to the invention, said elastically deformable area 13, together with said eyes 11, 12, forms a rigidly interconnected stirrup, which is in principle tubular and is weakened by means of an extensive throughout passage 130, the cross-section of which is circular or polygonal, and is symmetrical with regard to said substantially vertical geometric axis *z*, wherein said throughout passage 130 is embedded by elastically deformable lateral walls 131, 132 and extends along a substantially horizontal geometric axis *x*', which is parallel to the geometric axis *x*, *y* of the one of said eyes 11, 12. In addition, a measuring beam 14 is installed within this passage 130 at least approximately in the area of the longest distance between said lateral walls 131, 132, wherein said measuring beam 14 is firmly connected with each of said lateral walls 131, 132 and is elastically deformable and resistant in view of buckling at least in its longitudinal direction *y*', which extends perpendicularly to said longitudinal axis *x'* of said throughout passage 130.

Said measuring beam 14 comprises at least one flat surface 140', which extends in a direction along said longitudinal axis *x'*, so that suitable sensors 51, 52, 53, 54 of a measuring assembly 5 can be attached onto said flat surface 140', and are then electrically interconnected with each other in order to enable measuring of extensions or contractions of said measuring beam 14 in a direction of its longitudinal axis *x'*, which result from elastic deformations of the central area 13 due to displacement of lateral walls 131, 132 relatively to each other when said link member 1 is exposed to stresses in a direction along said substantially vertical geometric axis *z*.

Thanks to such design of said deformable central area 13, which is furnished with said central throughout passage 130, the shape of which fulfils the previously mentioned requirements and which is embedded by elastically deformable walls 131, 132, by tensioning the link member 1 said lateral walls 131, 132 expose tendency of approaching towards to each other, so that the measuring beam 14 is exposed to compression stresses and is then correspondingly contracted.

In a preferred embodiment according to Figs. 3 - 6, said central throughout passage 130 within said elastically deformable central area 13 of the link member 1 is available as a cylindrical through hole. In the shown embodiment, each of the lateral walls 131, 132 which surrounds said central throughout passage 130 in the central area 13 of the link member 1, is fitted with a flat external surface 131", 132", wherein the flat surfaces 131", 132" on both walls 131, 132 extend in a direction along said substantially vertical geometric axis *z* and parallel with each other. In such a design it is reasonable, if the longitudinal axis *y'* of the measuring beam 14 is arranged in a substantially horizontal diametrical plane of the cylindrical central passage 130 of the central area 13 of the link member 1. In such a case, in each of said walls 131, 132, in the area of each of said flat surfaces 131", 132" a throughout hole 131‴, 132‴ can be foreseen, and both through holes 131‴, 132‴ in both lateral walls 131, 132 extend coaxially with each other. Thanks to such an arrangement, said measuring beam 14 can be inserted through said holes 131‴, 132‴ and is in addition to that rigidly connected with each of said lateral walls 131, 132.

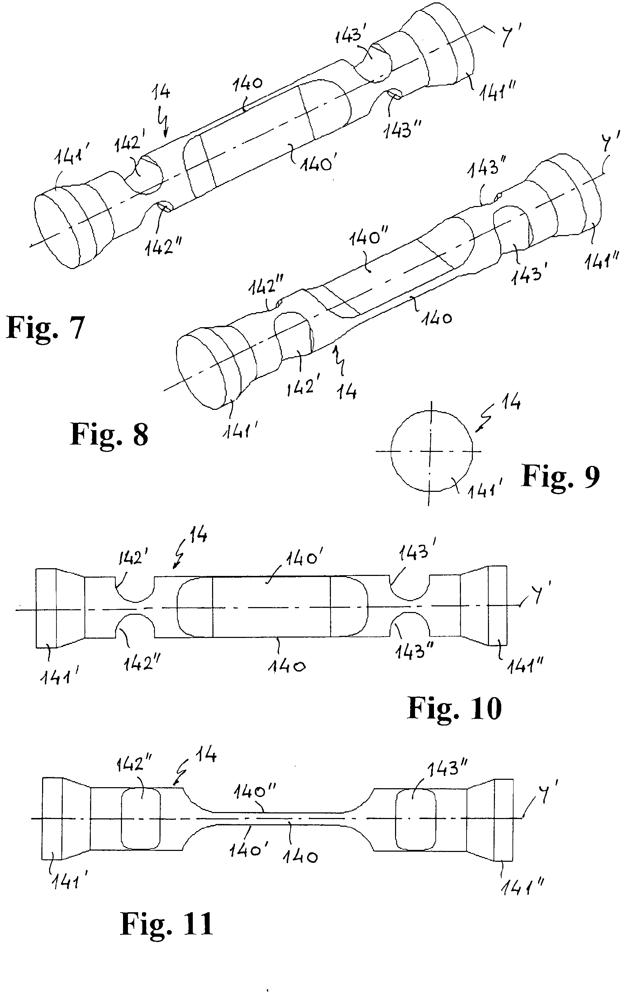

A preferred embodiment of said measuring beam 14 is separately presented in Figs. 7 - 13, in which it is also evident that said measuring beam 14 is generally cylindrical, while said flat surface 140', which passes in a direction along the longitudinal axis *x'* of said measuring beam 14 and is designed to receive said sensors 51, 52, 53, 54, is formed on the one of both opposite dominant surfaces 140', 140" of the significantly flattened and weakened central area 140 of the measuring beam 14, in which its cross-section is rectangular.

Moreover, in the sense of the previously mentioned placement into said lateral walls 131, 132, said measuring beam 14 can be on both its terminal ends furnished by cylindrical terminal areas 141', 141", which are adjusted for inserting into said coaxial holes 131‴, 132‴ in the walls 131, 132 of the elastically deformable central area 13 of the link member 1 and are moreover adjusted for establishing of a rigid connection between each of said terminal area 141', 141" of the measuring beam 14 and each corresponding lateral wall 131, 132 of the elastically deformable central area 13 of the link member 1.

When determining weight by means of said link member 1 it is preferred if the measuring beam 14 is exposed exclusively to mechanical stresses acting in its longitudinal direction *x'*, in particular to compression stresses, while any other potential stresses, like bending and torsion stresses, should preferably be eliminated. To this aim, the preferred embodiment of said measuring beam 14 allows elimination of undesired impacts, which might result from potentially occurring complex distribution of stresses within said measuring beam 14 by deformation of said lateral walls 131, 132 of the central area 13 of said link member 1. To this aim, when observed in a direction of its longitudinal geometric axis *y'*, on each side of said significantly flattened and weakened central area 140 of the measuring beam 14, the cross-section of which is rectangular, there are two transversal recesses 142', 142"; 143', 143", which are each per se semi-circular and U-shaped in profile, and are located between said central area 140 and each corresponding terminal area 141', 141", wherein each two opposite recesses 142', 142"; 143', 143", which are symmetrical with regard to said longitudinal geometric axis y', extend in a direction, which is transversal with regard to said longitudinal geometric axis *y'* and is moreover perpendicular with regard to the planes of both opposing dominant surfaces 140', 140" of said significantly flattened and weakened central area 140 of the measuring beam 14, in which its cross-section is rectangular.

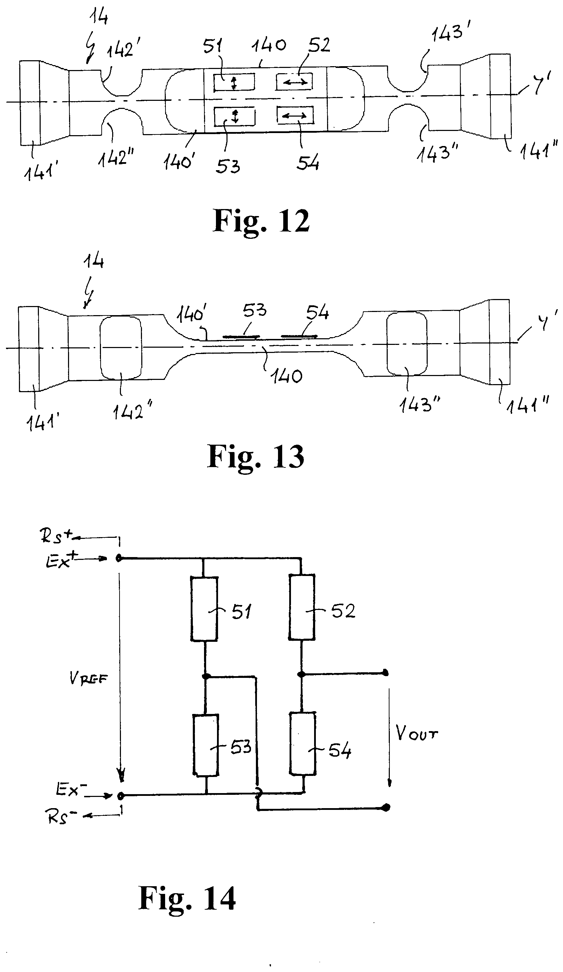

Measuring of deformations, in particular contractions of said measuring beam 14, which result from displacement of said lateral walls 131, 132 of the elastically deformable central area 13 of the link member 1, is performed by means of sensors 51, 52, 53, 54, which are placed onto just one of both opposite dominant surfaces 140', 140" of said significantly flattened and weakened central area 140 of the measuring beam 14, in which its cross-section is rectangular, wherein said sensors 51, 52, 53, 54 are arranged in such manner (Figs. 12 - 14), that the first pair of sensors 51, 54, which are spaced apart from each other and arranged symmetrically with regard to the longitudinal geometric axis *y'* of said measuring beam 14 is adjusted for measuring of extensions or contractions of said measuring beam 14 within said plane 141' and in a direction of its longitudinal geometric axis *y'*, while the remaining pair of sensors 52, 53, which are also spaced apart from each other mutually and arranged symmetrically with regard to said longitudinal geometric axis *y'*, is adjusted for measuring of extensions and contractions of said measuring beam 14 also within the plane 141', however in a direction along its transversal geometric axis *x'*, namely in a direction perpendicular to the longitudinal geometric axis *y'*, wherein both pairs of sensors 51, 54; 52, 53 are electrically interconnected with each other to form a Wheatstone bridge (i.e. a so-called *full-bridge strain gauge*), which in view of the electricity aspects forms an integral part of the measuring unit 5.

In the shown example, said sensors 51, 54; 52, 53 are attached to said surface 141' of the measuring beam 14 by means of adhesive, and are interconnected among each others in a previously described manner. Active resistor elements are adjusted for functioning as sensors 51, 54 and are capable of detecting each extension or contraction of said measuring beam 14 along the plane of said surface 141' and in its longitudinal direction along the geometric axis *y'*. Passive resistor elements are adjusted for functioning as reference sensors 52, 53 and are capable for measuring extensions or contractions of said measuring beam 14 within the same plane of said surface 141', however in the transversal direction, namely perpendicularly with regard to said longitudinal axis *y'*, wherein the lastly mentioned extensions or contractions may in fact be neglected due to behavior of stresses which are acting on said measuring beam 14 in the central area 13 of the link member 1. Simultaneously with extension or contraction of said measuring beam 14, sensors 51, 54 are also extended or contracted along said geometric axis *y'*, which results in changing of electrical resistance thereof, by which each change of electrical resistance in each sensor 51, 54 is linearly correlated with each change of the length of said measuring beam 14.

The relative change of the voltage across each resistor, namely sensor 51, 54 corresponds to the change in electrical resistance and consequently the change of the output voltage of said Wheatstone bridge is a sum of the voltage changes across both active sensors 51, 54. The sensitivity, which is enabled by such a circuit of sensors 51, 52, 53, 54 is consequently two times as big as in the case, where only one active sensor was used.

The advantage of such concept of interconnection of said sensors 51, 52, 53, 54 also results reduction of impact of external contact resistances, which would be unavoidable when just individual resistor sensors would be applied, and in addition to that, all thanks to such concept all sensors 51, 52, 53, 54 in such integrated version can be practically identical to each other. Since the changes in length of the measuring beam 14 are relatively small, the voltage differences between the reference voltage V_{REF} and the output voltage V_{OUT} are correspondingly small as well, which means that applying of a sensitive low-noise amplifier is generally recommendable prior to analog-digital conversion. In order to enhance accuracy by measuring said changes in length of the measuring beam 14, in the shown example, in addition to connectors E_{X+}, E_{X-}, a further pair of connectors R_{S+}, R_{S-} is used for energizing said group of sensors 51, 52, 53, 54, wherein said pair of connectors R_{S+}, R_{S-} is used to accurate measuring of a supplying i.e. reference voltage V_{REF} on connectors as such.

By static weighing of a load, when it is hung on said arm 90 of said crane 9 and held by said grabber 8, just measuring of deformations of the measuring beam 14 within in the central area 13 of the link member 1 is quite sufficient.

In the case of dynamic weighing of the load during transposition thereof, quite similarly like in the solution as disclosed in WO 2019/0009817 A, the measuring unit 5, in addition to said sensors 51, 52, 53, 54 on said measuring beam 14 in the central area 13 of said link member 1, also comprises at least two so-called EMU sensors, which are equipped with a gyroscope and are suitable for measuring of accelerations during the swinging of each load around said geometric axes *x* and *y,* wherein the first sensor is installed in the area between both eyes 11, 12, namely in the area between said geometric axes *x* and *y* of the link member 1, while the second sensor is installed in the area of the grabber 8 or rotator 81. Consequently, the data received from sensors 51, 52, 53, 54 is read and acknowledged only in the case, when the data received from said EMU sensors for detection of swinging of the load clearly show, that the measurement is performed in within the frame of regular conditions, which can be handled mathematically, namely within the framework of still acceptable deviations.

## Claims

1. Load weighing link member (1) for a crane (9) arm (90), which is on its one terminal area equipped with a first eye (11) furnished with a throughout bore (110), extending in a direction along the first substantially horizontal geometric axis (x), and is on the remaining terminal area equipped with a second eye (12) furnished with a through hole (120), extending in a direction along the second substantially horizontal geometric axis (y), which is perpendicular with regard to said first substantially horizontal geometric axis (x), wherein said eyes (11, 12) are firmly connected with each other via a central area (13), which is on the one hand mechanically rigid, but is on the other hand also elastically deformable, so that said link member (1) is adapted to form a connection, which is freely pivotable around each of said horizontal axles (*x, y*), on one hand with the arm (90) of the crane (9) via around said first horizontal axis (*x*) freely pivotable pivot joint (95), and on the other hand via a freely around said second horizontal axis (*y*) pivotable pivot joint (85) also with a grabber (8) or a rotator (81), which is connected to the grabber (8) and is adapted for enabling a controlled rotation of the grabber (8) around the substantially vertical geometric axis (*z*), wherein at least one sensor (51, 52, 53, 54) is installed within the area of said elastically deformable central area (13) of the link member (1) and is suitable for detecting deformations of the link member (1), which are generated due to the weight of said load, when it by means of said grabber (8) hung on the arm (90) of the crane (9), **characterized in that** said elastically deformable area (13) together with said eyes (11, 12) forms a rigidly interconnected stirrup, which is generally tubular conceived, and is weakened by an extensive throughout passage (130), which has either a circular or a polygonal cross-section, which is symmetric with regard to said substantially vertical geometric axis (*z*), wherein said throughout passage (130) is embedded by two elastically deformable lateral walls (131, 132) and extends along a substantially horizontal geometric axis (*x'*), which extends parallel to the geometric axis (*x, y*) of the one of said eyes (11, 12), and wherein within the interior of said passage (130), namely at least approximately in the area of the longest distance between said walls (131, 132), a measuring beam (14) is installed, which is rigidly connected to each one of both opposite walls (131, 132) and is moreover elastically deformable and stable in view of buckling at least in its longitudinal direction (*y'*) extending perpendicularly to said longitudinal axis (*x'*) of the throughout passage (130), wherein said measuring beam (14) comprises at least one flat surface (140'), which extends in a direction of said longitudinal axis (*x'*), and onto which sensors (51, 52, 53, 54) of the measuring assembly (5) are attached, which are electrically connected with each other and are suitable for measuring of extensions or contractions of said measuring beam (14) in a direction of its longitudinal axis (*x'*), which result from elastic deformations of the central area (13) due to relative displacement thereof, namely due to mutual approaching or distancing of the walls (131, 132) when the link member (1) is exposed to stresses in a direction along said substantially vertical geometric axis (*z*).

2. Link member (1) according to Claim 1, **characterized in that** said central throughout passage (130) in the elastically deformable central area (13) of the link member (1) is available as a cylindrical through hole.

3. Link member (1) according to Claim 2, **characterized in that** the longitudinal axis (*y'*) of the measuring beam (14) is arranged within a substantially horizontal diametrical plane of the cylindrical central passage (130) in the central area (13) of the link member (1).

4. Link member (1) according to any of the Claims 1 - 3, **characterized in that** each of the walls (131, 132) in the central area (13) of the link member (1), by which said throughout passage (130) is surrounded, is on its external surface (131', 132') furnished with a flat surface (131", 132"), wherein said flat surfaces (131", 132") on both opposite walls (131, 132) extend in a direction of said substantially vertical geometric axis (*z*) and are parallel with each other.

5. Link member (1) according to any of the Claims 2 - 4, **characterized in that** a through hole (131"', 132‴) is foreseen in each of said walls (131, 132) in the area of each of said flat surfaces (131", 132"), wherein said holes (131‴, 132‴) in both walls (131, 132) extend coaxially with each other, so that the measuring beam (14) is inserted through said holes (131"', 132‴) and is rigidly connected with each one of both opposite walls (131, 132).

6. Link member (1) according to any of the Claims 1 - 5, **characterized in that** the measuring beam (14) is in general cylindrically conceived, while said flat surface (140'), which extends in a direction of the longitudinal axis (*x'*) of said measuring beam (14) and is suitable for receiving said sensors (51, 52, 53, 54), is formed by one of both opposite dominant surfaces (140', 140") of a flattened and weakened central area (140) of the measuring beam (14), the cross-section of which is rectangular.

7. Link member (1) according to Claim 6, **characterized in that** said measuring beam (14) is in its both ends furnished with cylindrical areas (141', 141"), which are adjusted for inserting into said mutually coaxial holes (131‴, 132‴) within the opposite walls (131, 132) of said elastically deformable central area (13) of the link member (1), and are additionally adapted for establishing a rigid mutual interconnection between each of said terminal areas (141', 141") of the measuring beam (14) and each corresponding wall (131, 132) of the elastically deformable central area (13) of the link member (1).

8. Link member (1) according to Claim 7, **characterized in that,** when observed in a direction of said longitudinal directional axis (*y'*), on each side of said substantially flattened and weakened central area (140) of the measuring beam (14), in which its cross-section is rectangular, two substantially semicircular i.e. in profile U-shaped transversal recesses (142', 142"; 143', 143") are foreseen between said central area (140) and each corresponding terminal area (141', 141"), wherein each pair of opposite recesses (142', 142"; 143', 143"), which are symmetrical with regard to said longitudinal geometric axis (*y'*), extends in transversal direction with regard to said longitudinal geometric axis (*y'*) and simultaneously also in a direction, which is perpendicular with regard to planes of both opposite dominant surfaces (140', 140") of said substantially flattened and weakened central area (140) of the measuring beam (14) in the area of its rectangular cross-section.

9. Link member (1) according to any of the preceding Claims, **characterized in that** said sensors (51, 52, 53, 54), which are attached onto one of the opposite dominant surfaces (140', 140") of the weakened and significantly flattened central area (140) of the measuring beam (14) with said rectangular cross-section, are arranged in such manner that the first pair of sensors (51, 54), which are spaced apart from each other symmetrically with regard to the longitudinal geometric axis (*y'*), is adjusted for measuring of extensions or contractions of said measuring beam (14) along the plane (141') in a direction of the longitudinal geometric axis (*y'*) thereof, while the remaining pair of mutually spaced and with regard to the longitudinal geometric axis (*y'*) symmetrically arranged sensors (52, 53) is adjusted for measuring of extensions or contractions of said measuring beam (14) within the same plane (141'), however in a direction along its transversal geometric axis (*x'*), namely in a direction perpendicularly to the previously mentioned longitudinal geometric axis (*y'*), wherein both pairs of said sensors (51, 54; 52, 53) are electrically connected with each other to form a Wheatstone bridge, which in the electrical aspect forms an integral part of the measuring unit (5), which is suitable for measuring forces, which cause deformations of the measuring beam (14) in the central area (13) of the link member (1).

## Patentansprüche

1. Lastwiegeverbindungselement (1) für einen Arm (90) eines Krans (9), das an seinem einen Endbereich mit einer ersten Öse (11) versehen ist, die eine Durchgangsbohrung (110) aufweist, die sich in einer Richtung entlang der ersten, im Wesentlichen horizontalen geometrischen Achse (x) erstreckt, und am übrigen Endbereich mit einer zweiten Öse (12) versehen ist, die ein Durchgangsloch (120) aufweist, das sich in einer Richtung entlang der zweiten, im Wesentlichen horizontalen geometrischen Achse (y) erstreckt, welche senkrecht zu der ersten, im Wesentlichen horizontalen geometrischen Achse (x) ist, wobei die Ösen (11, 12) über einen Mittelbereich (13) fest miteinander verbunden sind, der einerseits mechanisch starr, andererseits jedoch auch elastisch verformbar ist, so dass das Verbindungselement (1) dazu ausgelegt ist, eine Verbindung herzustellen, die um jede der horizontalen Achsen (x, y) frei schwenkbar ist, einerseits mit dem Arm (90) des Krans (9) über ein um die erste horizontale Achse (x) frei schwenkbares Schwenkgelenk (95) und andererseits über ein um die zweite horizontale Achse (y) frei schwenkbares Schwenkgelenk (85) auch mit einem Greifer (8) oder einem Rotator (81) verbunden ist, der mit dem Greifer (8) verbunden ist und dazu ausgelegt ist, eine kontrollierte Drehung des Greifers (8) um die im Wesentlichen vertikale geometrische Achse (z) zu ermöglichen, wobei mindestens ein Sensor (51, 52, 53, 54) im Bereich des elastisch verformbaren Mittelbereichs (13) des Verbindungselements (1) angeordnet ist und dazu geeignet ist, Verformungen des Verbindungselements (1) zu erfassen, die durch das Gewicht der Last erzeugt werden, wenn diese mittels des Greifers (8) am Arm (90) des Krans (9) aufgehängt ist, **dadurch gekennzeichnet, dass** der elastisch verformbare Bereich (13) zusammen mit den Ösen (11, 12) einen starr miteinander verbundenen Bügel bildet, der im Wesentlichen röhrenförmig ausgebildet ist und durch einen groß dimensionierten, vollständig hindurchgehenden Durchgang (130) geschwächt ist, der entweder einen kreisförmigen oder einen polygonalen Querschnitt aufweist, der symmetrisch zur im Wesentlichen vertikalen geometrischen Achse (z) ist, wobei der vollständig hindurchgehende Durchgang (130) von zwei elastisch verformbaren Seitenwänden (131, 132) eingebettet ist und sich entlang einer im Wesentlichen horizontalen geometrischen Achse (x') erstreckt, die parallel zur geometrischen Achse (x, y) einer der Ösen (11, 12) verläuft, und wobei im Inneren des Durchgangs (130), nämlich zumindest annähernd im Bereich des größten Abstands zwischen den Wänden (131, 132), ein Messbalken (14) angeordnet ist, der starr mit jeder der beiden gegenüberliegenden Wände (131, 132) verbunden ist und darüber hinaus elastisch verformbar und zumindest in seiner Längsrichtung (y'), die senkrecht zur Längsachse (x') des vollständig hindurchgehenden Durchgangs (130) verläuft, knickstabil ist, wobei der Messbalken (14) mindestens eine ebene Fläche (140') aufweist, die sich in Richtung der Längsachse (x') erstreckt und auf der Sensoren (51, 52, 53, 54) der Messanordnung (5) angebracht sind, die elektrisch miteinander verbunden und dazu geeignet sind, Ausdehnungen oder Kontraktionen des Messbalkens (14) in Richtung seiner Längsachse (x') zu messen, die aus elastischen Verformungen des Mittelbereichs (13) aufgrund dessen relativer Verschiebung resultieren, nämlich aufgrund gegenseitiger Annäherung oder Entfernung der Wände (131, 132), wenn das Verbindungselement (1) Belastungen in einer Richtung entlang der im Wesentlichen vertikalen geometrischen Achse (z) ausgesetzt ist.

2. Verbindungselement (1) nach Anspruch 1, **dadurch gekennzeichnet, dass** der zentrale, vollständig hindurchgehende Durchgang (130) im elastisch verformbaren Mittelbereich (13) des Verbindungselements (1) als zylindrisches Durchgangsloch ausgebildet ist.

3. Verbindungselement (1) nach Anspruch 2, **dadurch gekennzeichnet, dass** die Längsachse (y') des Messbalkens (14) innerhalb einer im Wesentlichen horizontalen, diametralen Ebene des zylindrischen zentralen Durchgangs (130) im Mittelbereich (13) des Verbindungselements (1) angeordnet ist.

4. Verbindungselement (1) nach einem der Ansprüche 1 - 3, **dadurch gekennzeichnet, dass** jede der Wände (131, 132) im Mittelbereich (13) des Verbindungselements (1), von denen der vollständig hindurchgehende Durchgang (130) umgeben ist, an ihrer Außenfläche (131', 132') mit einer ebenen Fläche (131", 132") versehen ist, wobei sich die ebenen Flächen (131", 132") an beiden gegenüberliegenden Wänden (131, 132) in Richtung der im Wesentlichen vertikalen geometrischen Achse (z) erstrecken und parallel zueinander verlaufen.

5. Verbindungselement (1) nach einem der Ansprüche 2 - 4, **dadurch gekennzeichnet, dass** in jeder der Wände (131, 132) im Bereich jeder der ebenen Flächen (131", 132") ein Durchgangsloch (131‴, 132‴) vorgesehen ist, wobei die Löcher (131‴, 132‴) in beiden Wänden (131, 132) koaxial zueinander verlaufen, so dass der Messbalken (14) durch die Löcher (131‴, 132‴) eingeführt und fest mit jeder der beiden gegenüberliegenden Wände (131, 132) verbunden ist.

6. Verbindungselement (1) nach einem der Ansprüche 1 - 5, **dadurch gekennzeichnet, dass** der Messbalken (14) im Allgemeinen zylindrisch ausgebildet ist, während die flache Oberfläche (140'), die sich in Richtung der Längsachse (x') des Messbalkens (14) erstreckt und zur Aufnahme der Sensoren (51, 52, 53, 54) geeignet ist, von einer der beiden entgegengesetzten Hauptflächen (140', 140") eines abgeflachten und geschwächten Mittelbereichs (140) des Messbalkens (14) gebildet wird, dessen Querschnitt rechteckig ist.

7. Verbindungselement (1) nach Anspruch 6, **dadurch gekennzeichnet, dass** der Messbalken (14) an seinen beiden Enden mit zylindrischen Bereichen (141', 141") versehen ist, die zum Einführen in die zueinander koaxialen Löcher (131‴, 132"') in den gegenüberliegenden Wänden (131, 132) des elastisch verformbaren Mittelbereichs (13) des Verbindungselements (1) ausgelegt sind und zusätzlich dazu dienen, eine starre gegenseitige Verbindung zwischen jedem der Endbereiche (141', 141") des Messbalkens (14) und jeder entsprechenden Wand (131, 132) des elastisch verformbaren Mittelbereichs (13) des Verbindungselements (1) herzustellen.

8. Verbindungselement (1) nach Anspruch 7, **dadurch gekennzeichnet, dass** in Richtung der Längsrichtungsachse (y') betrachtet, auf jeder Seite des im Wesentlichen abgeflachten und geschwächten Mittelbereichs (140) des Messbalkens (14), in dem dessen Querschnitt rechteckig ist, zwei im Wesentlichen halbkreisförmige, d. h. im Profil U-förmige Querausnehmungen (142', 142"; 143', 143") zwischen dem Mittelbereich (140) und jedem entsprechenden Endbereich (141', 141") vorgesehen sind, wobei jedes Paar entgegengesetzter Aussparungen (142', 142"; 143', 143") symmetrisch zur genannten geometrischen Längsachse (y') ist, sich in Querrichtung zur genannten geometrischen Längsachse (y') und gleichzeitig auch in einer Richtung erstreckt, die senkrecht zu den Ebenen beider entgegengesetzter Hauptflächen (140', 140") des im Wesentlichen abgeflachten und geschwächten Mittelbereichs (140) des Messbalkens (14) im Bereich seines rechteckigen Querschnitts verläuft.

9. Verbindungselement (1) nach einem der vorstehenden Ansprüche, **dadurch gekennzeichnet, dass** die Sensoren (51, 52, 53, 54), die an einer der entgegengesetzten Hauptflächen (140', 140") des geschwächten und deutlich abgeflachten Mittelbereichs (140) des Messbalkens (14) mit dem rechteckigen Querschnitt angebracht sind, so angeordnet sind, dass das erste Paar von Sensoren (51, 54), die symmetrisch zur geometrischen Längsachse (y') beabstandet sind, auf die Messung von Ausdehnungen oder Kontraktionen des Messbalkens (14) entlang der Ebene (141') in Richtung seiner geometrischen Längsachse (y') eingestellt ist, während das verbleibende Paar von zueinander beabstandeten und bezüglich der geometrischen Längsachse (y') symmetrisch angeordneten Sensoren (52, 53) zur Messung von Ausdehnungen oder Kontraktionen des genannten Messbalkens (14) innerhalb derselben Ebene (141') eingestellt ist, jedoch in einer Richtung entlang seiner geometrischen Querachse (x'), nämlich in einer Richtung senkrecht zur zuvor genannten geometrischen Längsachse (y'), wobei beide Paare der genannten Sensoren (51, 54; 52, 53) elektrisch miteinander verbunden sind, um eine Wheatstone-Brücke zu bilden, die in elektrischer Hinsicht einen integralen Bestandteil der Messeinheit (5) bildet, die zur Messung von Kräften geeignet ist, die Verformungen des Messbalkens (14) im Mittelbereich (13) des Verbindungselements (1) verursachen.

## Revendications

1. Élément de liaison de pesée de charge (1) pour un bras (90) de grue (9), qui est équipé, sur une zone terminale, d'un premier œillet (11) doté d'un alésage traversant (110), s'étendant dans une direction le long du premier axe (x) géométrique sensiblement horizontal, et est équipé, sur la zone terminale restante, d'un deuxième œillet (12) doté d'un trou traversant (120), s'étendant dans une direction le long du deuxième axe (y) géométrique sensiblement horizontal, qui est perpendiculaire par rapport audit premier axe (x) géométrique sensiblement horizontal, dans lequel lesdits œillets (11, 12) sont reliés fermement l'un à l'autre via une zone centrale (13) qui est, d'une part, mécaniquement rigide mais est, d'autre part, également élastiquement déformable, de sorte que ledit élément de liaison (1) est adapté pour former une liaison, qui peut pivoter librement autour de chacun desdits axes (x, y) horizontaux, d'une part, avec le bras (90) de la grue (9) via une articulation pivotante (95) pivotant librement autour dudit premier axe (x) horizontal et, d'autre part, via une articulation pivotante (85) pivotant librement autour dudit deuxième axe horizontal (y), également avec un dispositif de préhension (8) ou un dispositif de rotation (81), qui est relié au dispositif de préhension (8) et est adapté pour permettre une rotation commandée du dispositif de préhension (8) autour de l'axe (z) géométrique sensiblement vertical, dans lequel au moins un capteur (51, 52, 53, 54) est installé à l'intérieur de la zone de ladite zone centrale élastiquement déformable (13) de l'élément de liaison (1) et est adapté pour détecter des déformations de l'élément de liaison (1), qui sont générées en raison du poids de ladite charge, lorsqu'elle est suspendue au bras (90) de la grue (9) au moyen dudit dispositif de préhension (8), **caractérisé en ce que** ladite zone élastiquement déformable (13), conjointement avec lesdits œillets (11, 12), forme un étrier interconnecté de manière rigide, qui est généralement conçu en forme tubulaire, et est affaibli par un passage traversant étendu (130), qui présente une section transversale circulaire ou polygonale, qui est symétrique par rapport audit axe (z) géométrique sensiblement vertical, dans lequel ledit passage traversant (130) est incorporé par deux parois latérales élastiquement déformables (131, 132) et s'étend le long d'un axe (x') géométrique sensiblement horizontal, qui s'étend parallèlement à l'axe (x, y) géométrique de l'un desdits oeillets (11, 12), et dans lequel, à l'intérieur dudit passage (130), à savoir au moins approximativement dans la zone de la distance la plus longue entre lesdites parois (131, 132), une poutre de mesure (14) est installée, qui est reliée de manière rigide à chacune des deux parois opposées (131, 132) et est en outre élastiquement déformable et stable en flambage au moins dans sa direction longitudinale (y') s'étendant perpendiculairement audit axe (x') longitudinal du passage traversant (130), dans lequel ladite poutre de mesure (14) comprend au moins une surface plate (140'), qui s'étend dans une direction dudit axe (x') longitudinal, et sur laquelle des capteurs (51, 52, 53, 54) de l'ensemble de mesure (5) sont attachés, qui sont reliés électriquement l'un à l'autre et sont adaptés pour mesurer des extensions ou des contractions de ladite poutre de mesure (14) dans une direction de son axe (x') longitudinal, qui résultent de déformations élastiques de la zone centrale (13) en raison d'un déplacement relatif de celle-ci, à savoir en raison d'un rapprochement ou d'un écartement des parois (131, 132) l'une par rapport à l'autre lorsque l'élément de liaison (1) est exposé à des contraintes dans une direction le long dudit axe (z) géométrique sensiblement vertical.

2. Élément de liaison (1) selon la revendication 1, **caractérisé en ce que** ledit passage traversant central (130) dans la zone centrale élastiquement déformable (13) de l'élément de liaison (1) est réalisé sous la forme d'un trou traversant cylindrique.

3. Élément de liaison (1) selon la revendication 2, **caractérisé en ce que** l'axe (y') longitudinal de la poutre de mesure (14) est agencé dans un plan diamétral sensiblement horizontal du passage central cylindrique (130) dans la zone centrale (13) de l'élément de liaison (1).

4. Élément de liaison (1) selon l'une des revendications 1-3, **caractérisé en ce que** chacune des parois (131, 132) dans la zone centrale (13) de l'élément de liaison (1), par laquelle ledit passage traversant (130) est entouré, est sur sa surface extérieure (131', 132') dotée d'une surface plate (131", 132"), dans lequel lesdites surfaces plates (131", 132") sur les deux parois opposées (131, 132) s'étendent dans une direction dudit axe (z) géométrique sensiblement vertical et sont parallèles l'une à l'autre.

5. Élément de liaison (1) selon l'une des revendications 2-4, **caractérisé en ce qu'**un trou traversant (131‴, 132‴) est prévu dans chacune desdites parois (131, 132) dans la zone de chacune desdites surfaces plates (131", 132"), dans lequel lesdits trous (131‴, 132‴) dans les deux parois (131, 132) s'étendent de manière coaxiale l'un par rapport à l'autre, de sorte que la poutre de mesure (14) est insérée à travers lesdits trous (131‴, 132"') et est reliée de manière rigide à chacune des deux parois opposées (131, 132).

6. Élément de liaison (1) selon l'une des revendications 1-5, **caractérisé en ce que** la poutre de mesure (14) est généralement conçue en forme cylindrique, alors que ladite surface plate (140'), qui s'étend dans une direction de l'axe (x') longitudinal de ladite poutre de mesure (14) et est adaptée pour recevoir lesdits capteurs (51, 52, 53, 54), est formée par l'une des deux surfaces dominantes opposées (140', 140") d'une zone centrale aplatie et affaiblie (140) de la poutre de mesure (14), dont la section transversale est rectangulaire.

7. Élément de liaison (1) selon la revendication 6, **caractérisé en ce que** ladite poutre de mesure (14) est dotée, sur ses deux extrémités, de zones cylindriques (141', 141"), qui sont ajustées pour être insérées dans lesdits trous coaxiaux l'un par rapport à l'autre (131‴, 132‴) dans les parois opposées (131, 132) de ladite zone centrale élastiquement déformable (13) de l'élément de liaison (1), et sont en plus adaptées pour établir une interconnexion mutuelle rigide entre chacune desdites zones terminales (141', 141") de la poutre de mesure (14) et chaque paroi correspondante (131, 132) de la zone centrale élastiquement déformable (13) de l'élément de liaison (1).

8. Élément de liaison (1) selon la revendication 7, **caractérisé en ce que**, lorsqu'il est observé dans une direction dudit axe (y') de direction longitudinale, de chaque côté de ladite zone centrale sensiblement aplatie et affaiblie (140) de la poutre de mesure (14), dans laquelle sa section transversale est rectangulaire, deux évidements transversaux sensiblement semi-circulaires, c'est-à-dire présentant un profil en forme de U (142', 142" ; 143', 143") sont prévus entre ladite zone centrale (140) et chaque zone terminale correspondante (141', 141"), dans lequel chaque paire d'évidements opposés (142', 142" ; 143', 143"), qui sont symétriques par rapport audit axe (y') géométrique longitudinal, s'étend dans une direction transversale par rapport audit axe (y') géométrique longitudinal et simultanément également dans une direction, qui est perpendiculaire par rapport à des plans des deux surfaces dominantes opposées (140', 140") de ladite zone centrale sensiblement aplatie et affaiblie (140) de la poutre de mesure (14) dans la zone de sa section transversale rectangulaire.

9. Élément de liaison (1) selon l'une des revendications précédentes, **caractérisé en ce que** lesdits capteurs (51, 52, 53, 54), qui sont attachés sur l'une des surfaces dominantes opposées (140', 140") de la zone centrale affaiblie et significativement aplatie (140) de la poutre de mesure (14) avec ladite section transversale rectangulaire, sont agencés de telle manière que la première paire de capteurs (51, 54), qui sont espacés l'un de l'autre symétriquement par rapport à l'axe (y') géométrique longitudinal, est ajustée pour mesurer des extensions ou des contractions de ladite poutre de mesure (14) le long du plan (141') dans une direction de l'axe (y') géométrique longitudinal de celle-ci, alors que la paire restante de capteurs (52, 53), espacés l'un de l'autre et agencés symétriquement par rapport à l'axe (y') géométrique longitudinal, est ajustée pour mesurer des extensions ou des contractions de ladite poutre de mesure (14) dans le même plan (141'), cependant dans une direction le long de son axe (x') géométrique transversal, à savoir dans une direction perpendiculaire à l'axe (y') géométrique longitudinal mentionné précédemment, dans lequel les deux paires desdits capteurs (51, 54 ; 52, 53) sont reliées électriquement l'une à l'autre pour former un pont de Wheatstone, qui, d'un point de vue électrique, forme une partie intégrante de l'unité de mesure (5), qui est adaptée pour mesurer des forces, qui créent des déformations de la poutre de mesure (14) dans la zone centrale (13) de l'élément de liaison (1).
